# EUROPEAN PATENT SPECIFICATION

(11) **EP 3 754 768 B1**
(45) Date of publication and mention of the grant of the patent: **15.02.2023**
(21) Application number: 19382509.8
(22) Date of filing: 18.06.2019
(51) Int. Cl.: H01M 8/00, H01M 8/12, H01M 8/124

(54) **ELECTROCHEMICAL CELL DEVICE FOR USE IN A SOFC AND/OR A SOEC AND METHODS FOR OPERATING A SOFC OR A SOEC BY USING THEREOF**
VORRICHTUNG MIT ELEKTROCHEMISCHER ZELLE ZUR VERWENDUNG IN EINER SOFC UND/ODER EINER SOEC UND VERFAHREN ZUM BETRIEB EINER SOFC ODER EINER SOEC DURCH VERWENDUNG DAVON
DISPOSITIF DE CELLULE ÉLECTROCHIMIQUE À UTILISER DANS UNE PILE SOFC ET/OU D'UNE PILE SOEC ET PROCÉDÉS DE FONCTIONNEMENT D'UNE PILE SOFC OU SOEC À L'AIDE DE CELUI-CI

(43) Date of publication of application: 23.12.2020
(73) Proprietor: FUNDACIÓ INSTITUT DE RECERCA EN ENERGIA DE CATALUNYA, 08930 Barcelona (ES); Institució Catalana de Recerca I Estudis Avançats, 08010 Barcelona (ES)
(72) Inventor: TARANCÓN RUBIO, Albert, 08031 BARCELONA (ES); TORRELL FARO, Marc, 08003 BARCELONA (ES); NÚÑEZ EROLES, Marc, AD500 ANDORRA LA VELLA (AD); PESCE, Arianna, 15076 Ovada (AL) (IT)
(74) Representative: Ponti & Partners, S.L.P

(56) References cited:
- CN-U- 208 849 009
- US-A- 4 100 331
- US-A1- 2005 042 490

## Description

### Field of the invention

The present invention relates to the field of electrochemistry. In particular, the present invention relates to an electrochemical cell device for use in a solid oxide fuel cell (SOFC) and/or a solid oxide electrolyser cell (SOEC) mode, and to a method for operating a solid oxide fuel cell and/or a solid oxide electrolyser cell by using said electrochemical cell device.

### Background of the invention

A fuel cell is an electrochemical cell that converts the potential energy from a fuel into electricity through an electrochemical reaction of hydrogen fuel with oxygen or another oxidizing agent. Fuel cells can produce electricity continuously for as long as fuel and oxygen are supplied.

Fuel cells are used for primary and backup power for commercial, industrial and residential buildings and in remote or inaccessible areas. They are also used to power fuel cell vehicles, including forklifts, automobiles, buses, boats, motorcycles and submarines.

There are many types of fuel cells, but they all consist of an anode, a cathode, and an electrolyte that allows positively charged hydrogen ions (protons) to move between the two sides of the fuel cell. At the anode a catalyst causes the fuel to undergo oxidation reactions that generate protons (positively charged hydrogen ions) and electrons. The protons flow from the anode to the cathode through the electrolyte after the reaction. At the same time, electrons are drawn from the anode to the cathode through an external circuit, producing direct current electricity. At the cathode, another catalyst causes hydrogen ions, electrons, and oxygen to react, forming water. Fuel cells are classified by the type of electrolyte they use and by the difference in startup time, ranging from 1 second for proton exchange membrane fuel cells (PEM fuel cells, or PEMFC) to 10 minutes for solid oxide fuel cells (SOFC).

Solid oxide fuel cells (SOFCs) use a solid material, most commonly a ceramic material called yttria-stabilized zirconia (YSZ), as the electrolyte. Because SOFCs are made entirely of solid materials, they are not limited to the flat plane configuration of other types of fuel cells and are often designed as rolled tubes. Indeed, due to the current processes for their manufacture, the geometry is usually basically flat or tube-shaped. They require high operating temperatures (800-1000 °C) and can be run on a variety of fuels including natural gas.

SOFCs are unique since negatively charged oxygen ions travel from the cathode (positive side of the fuel cell) to the anode (negative side of the fuel cell) instead of positively charged hydrogen ions travelling from the anode to the cathode, as it is the case in all other types of fuel cells. Oxygen gas is fed through the cathode, where it absorbs electrons to create oxygen ions. The oxygen ions then travel through the electrolyte to react with hydrogen gas at the anode. The reaction at the anode produces electricity and water as by-products. The chemical reactions for the SOFC system can be expressed as follows:
Anode Reaction: 2H₂ + 2O²⁻ → 2H₂O + 4e-
Cathode Reaction: O₂ + 4e- → 2O²⁻
Overall Cell Reaction: 2H₂ + O₂ → 2H₂O

A solid oxide electrolyzer cell (SOEC) is a solid oxide fuel cell that runs in regenerative mode to achieve the electrolysis of water (and/or carbon dioxide) by using a solid oxide, or ceramic, electrolyte to produce hydrogen gas (and/or carbon monoxide) and oxygen. The production of pure hydrogen is compelling because it is a clean fuel that can be stored easily, thus making it a potential alternative to batteries, which have a low storage capacity and create high amounts of waste materials. Electrolysis is currently the most promising method of hydrogen production from water due to high efficiency of conversion and relatively low required energy input when compared to thermochemical and photocatalytic methods.

Solid oxide electrolyzer cells operate at temperatures which allow high-temperature electrolysis to occur, typically between 500 and 850 °C. These operating temperatures are similar to those conditions for an SOFC. The net cell reaction yields hydrogen and oxygen gases. The reactions for one mole of water are shown below, with oxidation of water occurring at the anode and reduction of water occurring at the cathode.
Anode: O²⁻ → 1/2O₂ + 2e-
Cathode: H₂O + 2e- → H₂ + O²⁻
Net Reaction: H₂O → H₂ + 1/2O₂

There are clear limitations related to the ceramic industrial fabrication technology based mainly on the manufacture of sheets and extruded shapes by type casting or extrusion. The manufacture procedure is usually complicated and expensive and, in addition, the performance is also improvable. Accordingly, these fuel cells have very limited geometries (they are basically flat and tube shapes) and consequently a limited performance, in particular a limited volumetric power density.

In response to this need, the present inventors have developed an electrochemical cell device obtainable by 3D printing based on a novel helicoidal tubular shape which allows to increase the active catalyst surface and the reuse of waste, leading to an increased volumetric power density and robustness. Additionally, the new developed device has the advantages over current devices in that it is more robust, has more durability, has fewer connection problems, and its more flexible design allows for several applications in a single device (for example, SOEC, SOFC).

CN 208849009 U discloses a tubular SOFC, which comprises a cylindrical inner electrode, an electrolyte membrane and an outer electrode, and wherein the inner wall or the outer wall of the inner electrode is provided with at least one spiral flow channel for guiding gas to flow.

### Summary of the invention

In a first aspect, the present invention relates to an electrochemical cell device for use in a solid oxide fuel cell (SOFC) and/or a solid oxide electrolyser cell mode (SOEC).

In a second aspect, the present invention also relates to a method of operating a solid oxide fuel cell (SOFC) by using an electrochemical cell device according to the first aspect.

In a third aspect, the present invention further relates to a method of operating a solid oxide electrolyser cell (SOEC) by using an electrochemical cell device according to the first aspect.

In a fourth aspect, the present invention relates to a method of manufacturing an electrochemical cell device for use in a solid oxide fuel cell (SOFC) and/or a solid oxide electrolyser cell mode (SOEC).

### Brief description of the drawings

Fig. 1 shows a schematic cross section view of a first embodiment of the electrochemical cell device.
Fig. 2 shows a detailed view of the first and second fluid channels (3) and (4) defined by the first and second hollow helixes of the embodiment of figure 1.
Fig. 3 shows an isometric view of the upper part of the 3D printed monolithic body (1) of the embodiment of figure 1.
Fig. 4 shows an isometric view of a second embodiment of the electrochemical cell device, comprising a 3D printed monolithic body (1) with four repeated turns.
Fig. 5 shows an isometric view of a third embodiment of the claimed electrochemical cell device, comprising a 3D printed monolithic body (1) with three repeated turns and a corrugated electrolyte (5a) common wall which allows to increase the active area up to 80%.
Fig. 6 shows a cross-section view of the third embodiment of the claimed electrochemical cell device of figure 5.
Fig. 7 shows the main scheme of the device design according to the present invention being splitted into the different parts and according to the corresponding application (working as a SOFC or SOEC).

### Detailed description of the invention

In a first aspect the present invention relates to an electrochemical cell device for use in a solid oxide fuel cell (SOFC) and/or a solid oxide electrolyser cell mode (SOEC), comprising:
- a ceramic based monolithic jointless body with a double-helix structure (also referred herein as a double screw), preferably an Archimedes structure, obtainable by 3D ceramic printing.
   wherein said double-helix structure comprises:
   - a first hollow helix configured to act as anode and defining a first fluid circulation channel including an inlet and an outlet;
   - a second hollow helix configured to act as cathode and defining a second fluid circulation channel including an inlet and an outlet;
   - both first and second hollow helices having a common axis and differing between them by a translation along the axis so that the first fluid circulation channel is arranged adjacent to the second fluid circulation channel; and
   - a solid ceramic electrolyte arranged between the first and second fluid circulation channels;
   - the first fluid circulation channel and the second fluid circulation channel defining a helical circuit for either fuel or oxygen circulation depending on the electrochemical cell mode usage of the device.

It is apparent to a person skilled in the art that an element capable of collecting the generated electrical current, for example, a metallic paint, a metallic mesh or metallic wires made of Ni, Au, Ag or any metal that is stable at the operation temperature with high electrical conductivity, is to be provided in said electrochemical cell device for making use thereof.

In the context of the present invention, the term "fuel" is understood as H₂, CO and CH₄ in case of a SOFC configuration, and H₂O and CO₂ in case of a SOEC configuration.

According to a preferred embodiment of the present invention, a common wall of the adjacent first and second fluid circulation channels acting as anode and cathode defines the solid ceramic electrolyte arranged between the first and second fluid circulation channels. Thus, a very compact and efficient configuration of the electrochemical cell device is obtained. Advantageously, the solid ceramic electrolyte has a corrugated surface so that the active area of the electrochemical cell is increased up to 80%.

In one embodiment, the monolithic body comprises an inner chamber arranged along the common axis of the first and second hollow helixes, said inner chamber being in fluid communication with the inlet of the first channel defined by the first hollow helix acting as an anode.

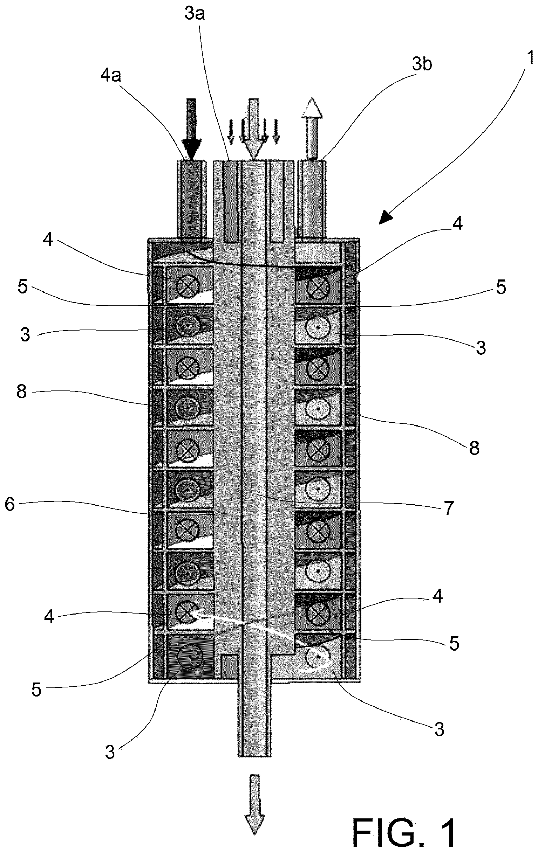

Preferably, the device comprises heating means arranged into said inner chamber for heating either the fuel or the oxygen, depending on the electrochemical cell mode usage of the device. Even more preferably, said heating means include a combustor for heating or burning fluids. In particular, said heating means as used in the context of the present invention can be the combustion heat provided by the corresponding chemical reaction as developed in the device, an electric resistance or even the inner tube, for example, as defined in figure 1 (7).

In a further embodiment, the monolithic body comprises a heating chamber arranged coaxially at the outer of the first and second hollow helices, the heating chamber being in fluid communication with the inlet and outlet of the second channel defined by the second hollow helix acting as a cathode.

According to a further preferred embodiment, the inner channel and/or the heating chamber comprise a layer of a catalytic material for the inner chamber to be used as a methane reformer, and/or for the heating chamber to be used as methanator depending on the electrochemical cell mode usage of the device.

In the context of the present invention, the term "methane reformer" is understood as the chamber where the methane is converted to H2 and O2 by the steam methane reformer reaction assisted by a specific catalyst that impregnates the chamber walls

In the context of the present invention, the term "methanator" is understood as the chamber where the CO and H2 produced on the electrolyser is catalytically converted to methane assisted by a specific catalyst that impregnates the chamber walls.

For one embodiment, the second fluid circulation channel is a channel open to the exterior of the monolithic body. In this case there is no need of air piping, avoiding the printing of manifolds for the inlet and outlet of the oxygen electrode. In this case the fabrication process is simplified.

The reactions developed in SOEC are as follows:
Anodic Chamber: After crossing the reformer the O2 (or Air) (or H2 + CO) enters to the anode
   channel, where following the ascending spiral reaches the fuel outlet. The reaction that takes place is:

   2O²⁻ → O₂ + 4e⁻
Cathodic Chamber: After passing through the external heater chamber, the fuel H2O (or H2O +CO2) enters to a descendent spiral in cross flow to the oxygen reaching the fuel outlet or methanator. The reactions that take place are:

   H₂O +2e- -> H₂ + O²⁻

   CO₂ + 2e⁻ -> CO + O²⁻

Said reactions are usually carried out at temperatures between 800 and 900°C.

The reactions developed in SOFC are as follows:
Anodic Chamber: After crossing the reformer the fuel H2 (or H2 + CO) enters to the anode channel, where following the ascending spiral reaches the fuel outlet.

   2H₂ + 2O²⁻ -> 2H₂O + 4e⁻
Cathodic Chamber: After passing through the external heater chamber, the air enters to the descendant spiral in cross-flow to the fuel, reaching the air outlet.

   O₂ + 4e⁻ -> 2O²⁻

Said reactions are usually carried out at temperatures between 800 and 900°C.

It is noted that any of the previous embodiments related to the electrochemical cell device can be combined each other.

In a second aspect, the present invention relates to a method of operating a solid oxide fuel cell (SOFC) by using an electrochemical cell device, as defined according to any of the embodiments according to the first aspect of the invention, comprising the steps of:
- feeding fuel to the first hollow helix acting as an anode from an inlet to an outlet by crossing the first fluid circulation channel of the body,
- feeding oxygen to the i second hollow helix acting as a cathode from and inlet to an outlet by crossing the second fluid circulation channel of the body, and
- providing oxygen anions from the cathode to the anode by means of a solid ceramic electrolyte arranged between the first and second fluid circulation channels respectively defined by the first and second hollow helixes.

According to a preferred embodiment, the cell device comprises an inner chamber arranged along the common axis of the first and second hollow helixes, said inner chamber having a layer of a catalytic material for use as a reformer, and;
- wherein the step of feeding fuel to the first hollow helix acting as an anode includes a methane reformer step for converting methane into CO and H_{2,} said methane reformer step being carried out when the fuel crosses said inner chamber.

In another embodiment, the method further comprising the step of:
- heating the cell device by means of heating means located into an inner tube (for example (7) in figure 1) arranged along the common axis of the first and second hollow helixes.

In a third aspect, the present invention relates to a method of operating a solid oxide fuel cell (SOEC) by using an electrochemical cell device, as defined according to any of the embodiments according to the first aspect of the invention, comprising the steps of:
- feeding fuel to the second hollow helix acting as an cathode from an inlet to an outlet by crossing the second fluid circulation channel of the body,
- feeding oxygen to the first hollow helix acting as a anode from and inlet to an outlet by crossing the first fluid circulation channel of the body, and
- providing oxygen anions from the cathode to the anode by means of a solid ceramic electrolyte arranged between the first and second fluid circulation channels respectively defined by the first and second hollow helixes.

In a further preferred embodiment, the cell device comprises a heating chamber arranged coaxially at the outer of the first and second hollow helixes, said heating chamber having a layer of a catalytic material for use a methanator, and;
- wherein the step of feeding fuel to the second hollow helix acting as a cathode includes a methanator step for obtaining methane, said methanator step being carried out when the fuel crosses said heating chamber.

In an even further preferred embodiment, the method further comprising the step of:
- heating the cell device by means of heating means located into an inner chamber arranged along the common axis of the first and second hollow helixes.

In a fourth aspect, the present invention relates to method for manufacturing an electrochemical cell device as defined according to any of the embodiments according to the first aspect of the invention, characterized in that it comprises the steps of:
- preparing a 3D printing slurry, preferably made of zirconia optionally doped with gadolinium or ceria optionally doped with yttrium;
- feeding the prepared printing slurry into a 3D printer of the type SLA printer, wherein;
   i. a first thin layer is deposited on a building platform, the first layer having the shape of the first layer of the monolithic body,
   ii. the deposited layer is cured by using a UV laser, thereby polymerizing the monomer forming the deposited layer as to become a solid polymer holding a ceramic powder susceptible to act as an electrolyte,
   iii. the building platform is moved down and steps i) and ii) are repeated so that the monolithic body is growing in a third coordinate (Y) until finishing and thereby obtaining a final green monolithic body, wherein "green" is referred herein to the ceramic material together with the cured polymer before being sintered;
   iv. organic material is removed from the green body by a thermal treatment under oxygen atmosphere to yield a brown body free from organic material, wherein "brown" is referred herein to the ceramic material which has not been densified yet;
- sintering the jointless monolithic body to provide the densified ceramic electrochemical cell device, and
- functionalizing by coating or impregnation the anodic and cathodic first and second channels respectively defined by the first and second hollow helixes.

It is apparent to a person skilled in the art that an element capable of collecting the generated electrical current, for example, a metallic paint, a metallic mesh or metallic wires made of Ni, Au, Ag or any metal that is stable at the operation temperature with high electrical conductivity, is to be incorporated in said electrochemical cell device for making use thereof.

"Functionalization" in the context of the present invention is to be understood as the application of the anodic, cathodic and reformer/methanator chamber.

### Brief description of embodiments and corresponding drawings

For a better understanding of what has been outlined, drawings are attached which schematically and solely by way of example without limiting the scope of this inventions show several embodiments of the claimed electrochemical cell device.

Fig. 1 shows a schematic cross section view of a first embodiment of the electrochemical cell device (1) wherein the 3D printed monolithic body (1) includes first and second fluid channels (3,4) configured to act as anode and cathode, and defined by the first and second hollow helixes. An inner chamber (6) is arranged along a common axis. Both first and second fluid channels (3, 4) define helical circuits for either the fuel or oxygen circulation, and are arranged adjacent each other so that a common wall defines the solid ceramic electrolyte (5). Inside the inner chamber (6) there is a tube (7) wherein a combustor is arranged for starting up and heating up the device (1). The monolithic body (1) of embodiment of figure 1 additionally includes a heating chamber (8) arranged coaxially at the outer of the first and second hollow helixes. Said heating chamber (8) is in fluid communication with the inlet (4a) and outlet (4b) of the second fluid channel (4) defined by the second hollow helix acting as cathode.

According to a SOEC configuration of the cell device of figure 1, the coaxially arranged heating chamber (8) comprises a layer of catalytic material for this heating chamber (8) to be used as a methanator (400-700°C) for transforming by a catalytic reaction the H2 and CO produced into methane. This is basically performed by Ni or Fe or Zn by the known fischer tropsch process;
CO+H₂ 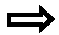 CH₄+H₂O (or other reactions to form CnHn+2).

According to a SOFC configuration of the cell device of figure 1, the inner chamber (6) comprises a layer of catalytic material for this inner chamber to be used as a methane reformer (700-800°C) for transforming by a catalytic reaction the fed Methane (CH4) to H2 and CO, which both are fuels for the Solid Oxide Fuel cell. This is basically performed by Ni catalysts and can be done by two main endothermic routes;
Dry reforming: CH₄+CO₂ 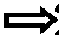 2CO+ 2H₂ ΔHr = +247.0 kJ/mol
Steam reforming: CH₄+H₂O 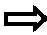 CO+3H₂ ΔHr= +206 kJ/mol,

In the SOFC configuration, the inner tube (7) of the cell device works as a cylindrical pre-combustor for starting up the device (1) based on Catalytic Partial Oxidation (CPO). Fuel crosses the inner chamber (6) where the inner tube (7) is arranged from side to side for fuel reforming prior entering the first channel (3) acting as anode. The coaxially arranged heating chamber (8) works as a secondary gas channel allowing gas flow for heat exchange purposes.

According to the mentioned SOFC configuration, the fuel circuit starts at the fuel inlet (4a) and, after crossing the inner chamber (6) working as a reformer enters into the first fluid channel (3) acting as anode where, following an ascending spiral, reaches the fuel outlet (4b). The air circuit starts at the air inlet (3a) from where it reaches the most external chamber (8). After describing a descending spiral the circuit goes into the second fluid channel (4) acting as cathode for ascending to the air outlet (3b). The estimate power of a single electrochemical cell is 20 W per single cell with a power volume density of ca. 0.5 W/cm³.

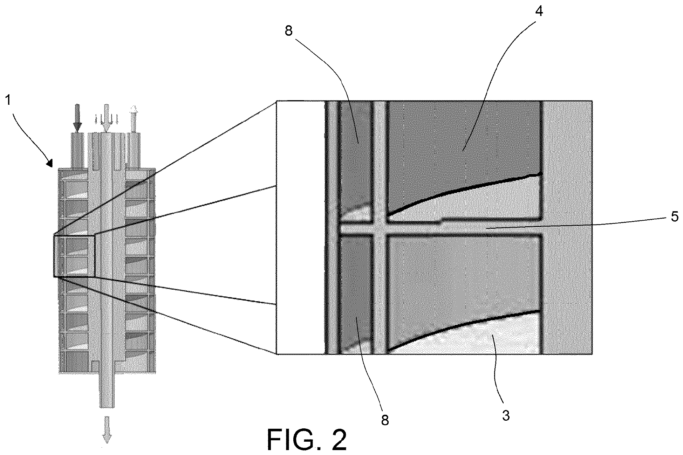

Fig. 2 shows a detailed view of the first and second fluid channels 3 and 4 defined by the first and second hollow helixes of the embodiment of figure 1. These fluid channels are arranged adjacent each other so that a common wall works as electrolyte (5) between the anode and cathode.

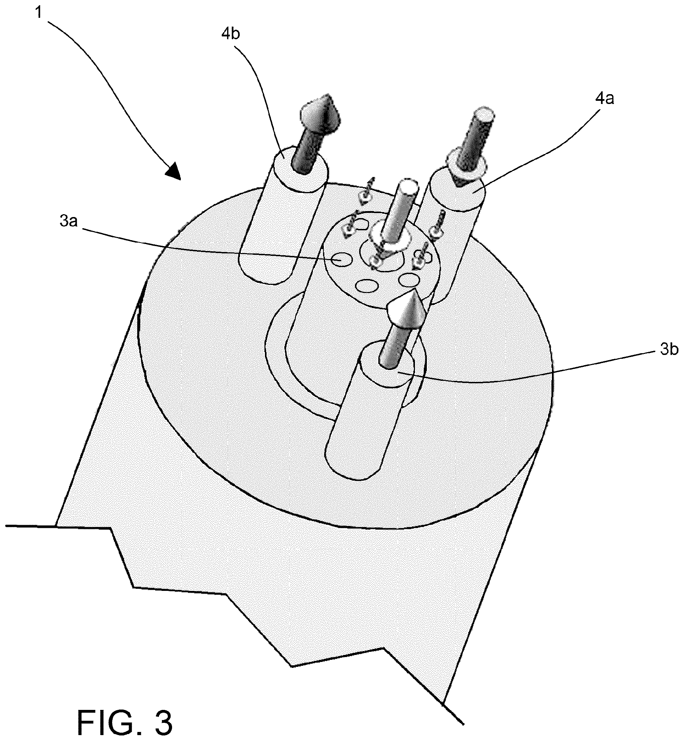

Fig. 3 shows an isometric view of the upper part of the 3D printed monolithic body (1) of the embodiment of figure 1, where the fuel inlet (4a), fuel outlet (4b), air inlet (3a) and air outlet (3b) of the electrochemical cell are shown.

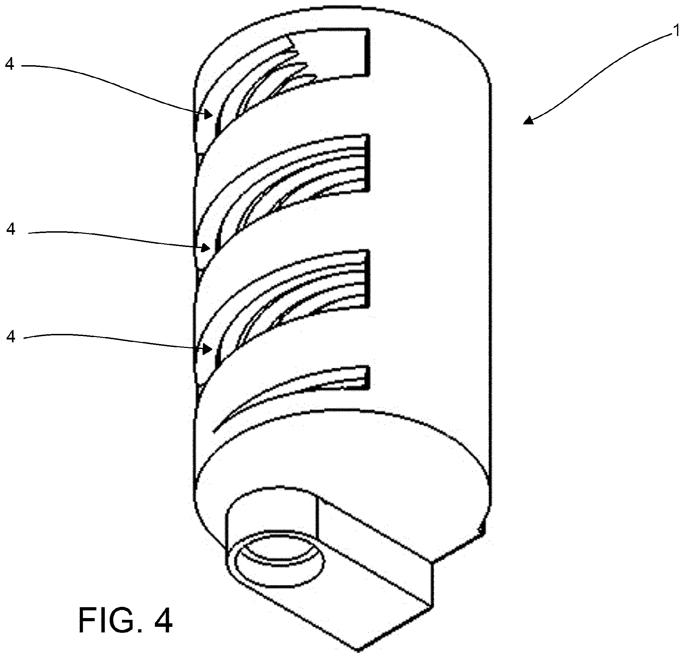

Fig. 4 shows an isometric view of a second embodiment of the claimed electrochemical cell device, comprising a 3D printed monolithic body (1) with four repeated turns. Even though only 4 turns are shown the number of turns is not limitative a feature. This embodiment is characterized by the fact that the second fluid circulation channel (4) acting as cathode is open to the exterior of the body (1) of the electrochemical cell device. In this embodiment, the device might work as a SOEC or SOFC.

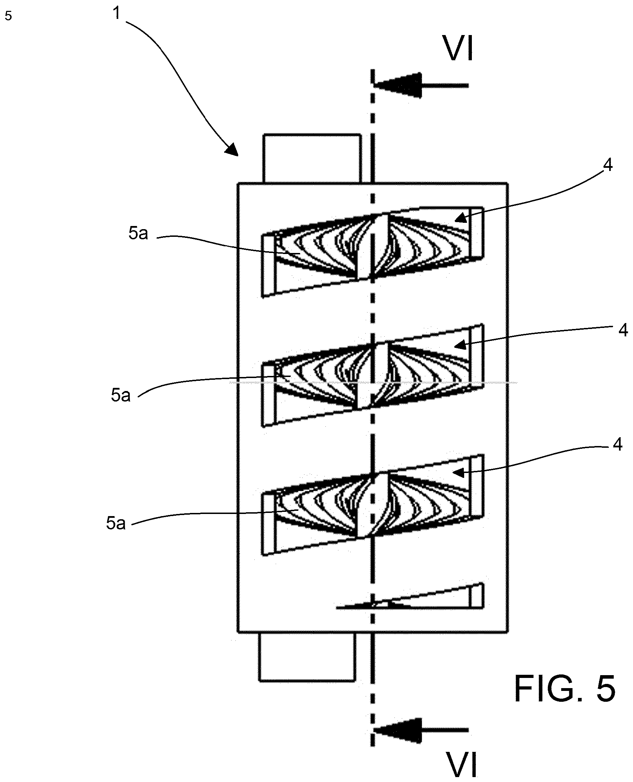

Fig. 5 shows an isometric view of a third embodiment of the claimed electrochemical cell device, comprising a 3D printed monolithic body (1) with three repeated turns and a corrugated electrolyte (5a) common wall which allows to increase the active area up to 80%. This embodiment is also characterized by the fact that the second fluid circulation channel (4) acting as cathode is open to the exterior of the body (1) of the electrochemical cell device.

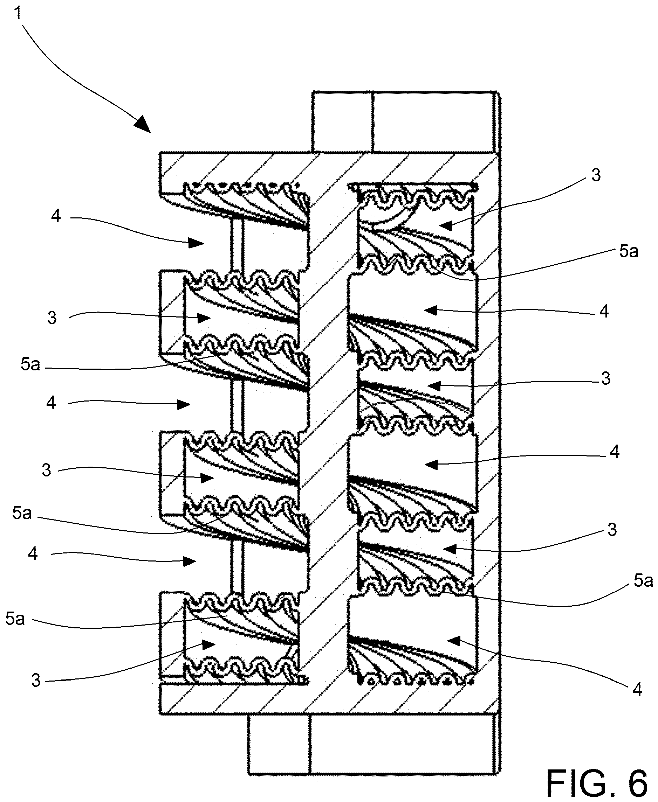

Fig. 6 shows a cross-section view of the third embodiment of the claimed electrochemical cell device of figure 5 with three repeated turns and the corrugated electrolyte (5a) common wall.

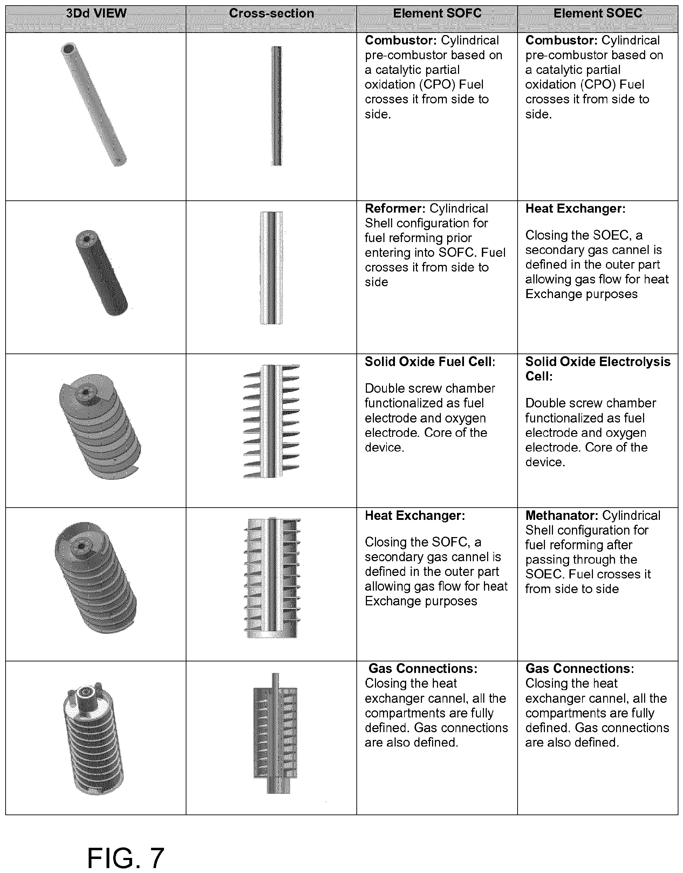

Fig. 7 shows the main scheme of the device design according to the present invention being splitted into the different parts and according to the corresponding application (working as SOFC or SOEC). The different parts are defined from the inner part of the device to the most external chamber. Its chamber is defined in accordance with its role on the final device depending on the operation mode. The first chamber is a combustor in both cases, which could be used to heat up the device using O₂ and H₂ as reactive or other heating systems. The second described chamber is the concentric tube to the combustor, used as reformer on the SOFC mode, to convert the methane to H₂ and CO used as fuels and optional heat exchanger on the SOEC mode. The third chamber is the core of the device, both in the SOFC or SOEC modes, which implies the same configuration and functionalization of the chambers. Finally the last chamber is used as an optional heat exchanger in the SOFC mode and used as a methanator for the SOEC mode. The produced H₂ and CO from the SOEC are converted to methane within the methanator. The latter box describes the inlets and outlets of the gas connections for the manifolds of the system.

Although reference has been made to specific embodiments of the invention, it would be apparent to a person skilled in the art that the system as described may be subject to numerous variations and modifications, and that all the details mentioned can be replaced with other elements being technically equivalent without departing from the scope of protection defined by the appended claims.

## Claims

1. An electrochemical cell device for use in a solid oxide fuel cell (SOFC) and/or a solid oxide electrolyser cell mode (SOEC), comprising:
- a ceramic based monolithic jointless body (1) with a double-helix structure obtainable by 3D ceramic printing,
wherein said double-helix structure comprises:
- a first hollow helix configured to act as anode and defining a first fluid circulation channel (3) including an inlet (3a) and an outlet (3b);
- a second hollow helix configured to act as cathode and defining a second fluid circulation channel (4) including an inlet (4a) and an outlet (4b);
- both first and second hollow helices having a common axis and differing between them by a translation along the axis so that the first fluid circulation channel (3) is arranged adjacent to the second fluid circulation channel (4); and
- a solid ceramic electrolyte (5) arranged between the first and second fluid circulation channels (3, 4);
- the first fluid circulation channel (3) and the second fluid circulation channel (4) defining a helical circuit for either fuel or oxygen circulation depending on the electrochemical cell mode usage of the device.

2. The electrochemical cell device according to claim 1, wherein the second fluid circulation channel (4) is a channel open to the exterior of the monolithic body (1).

3. The electrochemical cell device according to claim 1, wherein the monolithic body (1) comprises an inner chamber (6) arranged along the common axis of the first and second hollow helixes, said inner chamber (6) being in fluid communication with the inlet (3a) of the first channel (3) defined by the first hollow helix acting as an anode.

4. The electrochemical cell device according to claim 3, wherein the device comprises heating means arranged into the inner chamber (6) for heating either the fuel or the oxygen depending on the electrochemical cell mode usage of the device.

5. The electrochemical cell device according to claim 4, wherein the heating means includes a combustor for heating or burning fluids.

6. The electrochemical cell device according to any one of claims 3 to 5, wherein the monolithic body (1) comprises a heating chamber (8) arranged coaxially at the outer of the first and second hollow helices, the heating chamber (8) being in fluid communication with the inlet (4a) and outlet (4b) of the second channel (4) defined by the second hollow helix acting as a cathode.

7. The electrochemical cell device according to any of claims 1 and 3 to 6, wherein the inner chamber (6) and/or the heating chamber (8) comprise a layer of a catalytic material for the inner chamber (6) to be used as a methane reformer, and/or for the heating chamber (8) to be used as methanator depending on the electrochemical cell mode usage of the device.

8. The electrochemical cell device according to any one of previous claims, wherein the solid ceramic electrolyte (5a) has a corrugated surface.

9. The electrochemical cell device according to any one of previous claims, wherein a common wall of the adjacent first and second fluid circulation channels (3, 4) defines the solid ceramic electrolyte (5) arranged between the first and second fluid circulation channels (3, 4).

10. A method of operating a solid oxide fuel cell (SOFC) by using an electrochemical cell device according to any of claims 1 to 9, comprising the steps of:
- feeding fuel to the first hollow helix acting as an anode from an inlet (3a) to an outlet (3b) by crossing the first fluid circulation channel (3) of the body (1), feeding oxygen to the second hollow helix acting as a cathode from and inlet (4a) to an outlet (4b) by crossing the second fluid circulation channel (4) of the body (1), and
- providing oxygen anions from the cathode to the anode by means of a solid ceramic electrolyte (5) arranged between the first and second fluid circulation channels (3, 4) respectively defined by the first and second hollow helixes.

11. A method of operating a solid oxide electrolyser cell (SOEC) by using an electrochemical cell device according to any of claims 1 to 9, comprising the steps of:
- feeding fuel to the second hollow helix acting as an cathode from an inlet (4a) to an outlet (4b) by crossing the second fluid circulation channel (4) of the body (1),
- feeding oxygen to the first hollow helix acting as a anode from and inlet (3a) to an outlet (3b) by crossing the first fluid circulation channel (3) of the body (1), and
- providing oxygen anions from the cathode to the anode by means of a solid ceramic electrolyte (5) arranged between the first and second fluid circulation channels (3, 4) respectively defined by the first and second hollow helixes.

12. A method according to claim 10, wherein the cell device comprises an inner chamber (6) arranged along the common axis of the first and second hollow helixes, said inner chamber (6) having a layer of a catalytic material for use as a reformer,
- wherein the step of feeding fuel to the first hollow helix acting as an anode includes a methane reformer step for converting methane into CO and H₂, said methane reformer step being carried out when the fuel crosses said inner chamber (6).

13. The method according 11, wherein the cell device comprises a heating chamber (8) arranged coaxially at the outer of the first and second hollow helixes, said heating chamber (8) having a layer of a catalytic material for use a methanator,
- wherein the step of feeding fuel to the second hollow helix acting as a cathode includes a methanator step for obtaining methane, said methanator step being carried out when the fuel crosses said heating chamber (8).

14. The method according to any of claims 10 to 13, further comprising the step of:
- heating the cell device by means of heating means located into an inner chamber (6) arranged along the common axis of the first and second hollow helixes.

15. A method for manufacturing an electrochemical cell device according to any of claims 1 to 9, **characterized in that** it comprises the steps of:
- preparing a 3D printing slurry;
- feeding the prepared printing slurry into a 3D printer of the type SLA printer, wherein;
i. a first thin layer is deposited on a building platform, the first layer having the shape of the first layer of the monolithic body,
ii. the deposited layer is cured by using a UV laser, thereby polymerizing the monomer forming the deposited layer as to become a solid polymer holding a ceramic powder susceptible to act as an electrolyte,
iii. the building platform is moved down and steps i) and ii) are repeated so that the monolithic body (1) is growing in a third coordinate (Y) until finishing and thereby obtaining a final green monolithic body (1);
iv. organic material is removed from the green body (1) by a thermal treatment under oxygen atmosphere to yield a brown body free from organic material;
- sintering the jointless monolithic body (1) to provide the densified ceramic electrochemical cell device, and
- functionalizing by coating or impregnation the anodic and cathodic first and second channels (3, 4) respectively defined by the first and second hollow helixes.

## Patentansprüche

1. Elektrochemische Zellenvorrichtung zur Verwendung in einer Festoxid-Brennstoffzelle (SOFC) und/oder einer Festoxid-Elektrolyseurzelle (SOEC), umfassend:
- einen keramikbasierten, monolithischen, fugenlosen Körper (1) mit einer Doppelhelixstruktur, erhältlich durch 3D-Keramikdruck,
wobei die Doppelhelixstruktur umfasst:
- eine erste Hohlhelix, die so konfiguriert ist, dass sie als Anode wirkt und einen ersten Fluidzirkulationskanal (3) mit einem Einlass (3a) und einem Auslass (3b) definiert;
- eine zweite Hohlhelix, die so konfiguriert ist, dass sie als Kathode wirkt und einen zweiten Fluidzirkulationskanal (4) mit einem Einlass (4a) und einem Auslass (4b) definiert;
- wobei sowohl die erste als auch die zweite Hohlhelix eine gemeinsame Achse aufweisen und sich voneinander durch eine Verschiebung entlang der Achse unterscheiden, dass der erste Fluidzirkulationskanal (3) neben dem zweiten Fluidzirkulationskanal (4) angeordnet ist; und
- einen keramischen Feststoffelektrolyten (5), der zwischen dem ersten und dem zweiten Flüssigkeitszirkulationskanal (3, 4) angeordnet ist;
- wobei der erste Fluidzirkulationskanal (3) und der zweite Fluidzirkulationskanal (4) einen helikalen Kreislauf entweder für die Brennstoffzirkulation oder die Sauerstoffzirkulation definieren, und zwar je nach der Verwendungsart der elektrochemischen Zellenvorrichtung.

2. Elektrochemische Zellenvorrichtung nach Anspruch 1, wobei es sich beim zweiten Fluidzirkulationskanal (4) um einen Kanal handelt, der zum Außenbereich des monolithischen Körpers (1) hin offen ist.

3. Elektrochemische Zellenvorrichtung nach Anspruch 1, wobei der monolithische Körper (1) eine innere Kammer (6) umfasst, die entlang der gemeinsamen Achse der ersten und der zweiten Hohlhelix angeordnet ist, wobei die innere Kammer (6) in Fluidverbindung mit dem Einlass (3a) des ersten Kanals (3), der durch die als Anode wirkende erste Hohlhelix definiert ist, steht.

4. Elektrochemische Zellenvorrichtung nach Anspruch 3, wobei die Vorrichtung ein Heizmittel umfasst, das in der inneren Kammer (6) angeordnet ist, um entweder den Brennstoff oder den Sauerstoff zu erhitzen, abhängig von der elektrochemischen Verwendungsart der Vorrichtung.

5. Elektrochemische Zellenvorrichtung nach Anspruch 4, wobei das Heizmittel eine Brennkammer zum Erhitzen oder Verbrennen von Fluiden umfasst.

6. Elektrochemische Zellenvorrichtung nach einem der Ansprüche 3 bis 5, wobei der monolithische Körper (1) eine Heizkammer (8) umfasst, die koaxial außen an der ersten und der zweiten Hohlhelix angeordnet ist, wobei die Heizkammer (8) in Fluidverbindung mit dem Einlass (4a) und dem Auslass (4b) des zweiten Kanals (4), der durch die als eine Kathode wirkende zweite Hohlhelix definiert ist, steht.

7. Elektrochemische Zellenvorrichtung nach einem der Ansprüche 1 und 3 bis 6, wobei die innere Kammer (6) und/oder die Heizkammer (8) eine Schicht eines katalytischen Materials für die als Methanreformer zu verwendende innere Kammer (6) und/oder für die als Methanator zu verwendende Heizkammer (8) umfassen, abhängig von der elektrochemischen Verwendungsart der Vorrichtung.

8. Elektrochemische Zellenvorrichtung nach einem der vorstehenden Ansprüche, wobei der keramische Feststoffelektrolyt (5a) eine gerippte Oberfläche aufweist.

9. Elektrochemische Zellenvorrichtung nach einem der vorstehenden Ansprüche, wobei eine gemeinsame Wand der benachbarten ersten und zweiten Fluidzirkulationskanäle (3, 4) den keramischen Feststoffelektrolyten (5) definiert, der zwischen dem ersten und dem zweiten Fluidzirkulationskanal (3, 4) angeordnet ist.

10. Verfahren zum Betreiben einer Festoxid-Brennstoffzelle (SOFC) unter Verwendung einer elektrochemischen Zellenvorrichtung nach einem der Ansprüche 1 bis 9, umfassend die Stufen:
- Zuführen von Brennstoff zu der als Anode wirkenden ersten Hohlhelix von einem Einlass (3a) zu einem Auslass (3b) unter Durchlaufen des ersten Fluidzirkulationskanals (3) des Körpers (1), Zuführen von Sauerstoff zu der als Kathode wirkenden zweiten Hohlhelix von einem Einlass (4a) zu einem Auslass (4b) unter Durchlaufen des zweiten Fluidzirkulationskanals (4) des Körpers (1), und
- Bereitstellen von Sauerstoffanionen von der Kathode zu der Anode mittels eines keramischen Feststoffelektrolyten (5), der zwischen dem ersten und dem zweiten Fluidzirkulationskanal (3, 4) angeordnet ist, die jeweils durch die erste und die zweite Hohlhelix definiert werden.

11. Verfahren zum Betreiben einer Festoxid-Elektrolyseurzelle (SOEC) unter Verwendung einer elektrochemischen Zellenvorrichtung nach einem der Ansprüche 1 bis 9, umfassend die Stufen:
- Zuführen von Brennstoff zu der als Kathode wirkenden zweiten Hohlhelix von einem Einlass (4a) zu einem Auslass (4b) unter Durchlaufen des zweiten Fluidzirkulationskanals (4) des Körpers (1),
- Zuführen von Sauerstoff zu der als Anode wirkenden ersten Hohlhelix von einem Einlass (3a) zu einem Auslass (3b) unter Durchlaufen des ersten Fluidzirkulationskanals (3) des Körpers (1), und
- Bereitstellen von Sauerstoffanionen von der Kathode zur Anode mittels eines keramischen Feststoffelektrolyten (5), der zwischen dem ersten und dem zweiten Fluidzirkulationskanal (3, 4) angeordnet ist, die jeweils durch die erste und zweite Hohlhelix definiert werden.

12. Verfahren nach Anspruch 10, wobei die Zellenvorrichtung eine innere Kammer (6) umfasst, die entlang der gemeinsamen Achse der ersten und der zweiten Hohlhelix angeordnet ist, wobei die innere Kammer (6) eine Schicht aus einem katalytischen Material zur Verwendung als Reformer aufweist,
- wobei der Schritt des Zuführens von Brennstoff zu der als Anode wirkenden ersten Hohlhelix einen Methanreformerschritt zum Umwandeln von Methan in CO und H₂ umfasst, wobei der Methanreformerschritt ausgeführt wird, wenn der Brennstoff die innere Kammer (6) durchläuft.

13. Verfahren nach Anspruch 11, wobei die Zellenvorrichtung eine Heizkammer (8) umfasst, die koaxial außen an der ersten Hohlhelix und der zweiten Hohlhelix angeordnet ist, wobei die Heizkammer (8) eine Schicht eines als Methanator dienenden katalytischen Materials aufweist,
- wobei die Stufe der Zufuhr von Brennstoff zu der als Kathode wirkenden zweiten Hohlhelix eine Methanisierungsstufe zur Gewinnung von Methan umfasst, wobei die Methanisierungsstufe ausgeführt wird, wenn der Brennstoff die Heizkammer (8) durchläuft.

14. Verfahren nach einem der Ansprüche 10 bis 13, ferner umfassend die Stufe:
- Erhitzen der Zellenvorrichtung mittels Heizmittel, das sich in einer inneren Kammer (6) befindet, die entlang der gemeinsamen Achse der ersten und der zweiten Hohlhelix angeordnet ist.

15. Verfahren zur Herstellung einer elektrochemischen Zellenvorrichtung nach einem der Ansprüche 1 bis 9, **dadurch gekennzeichnet, dass** es die Stufen umfasst:
- Vorbereiten einer 3D-Druckaufschlämmung;
- Einspeisen der vorbereiteten Druckaufschlämmung in einen 3D-Drucker vom Typ eines SLA-Druckers, wobei;
i. eine erste dünne Schicht auf einer Aufbauplattform abgeschieden wird, wobei die erste Schicht die Form der ersten Schicht des monolithischen Körpers aufweist,
ii. die abgeschiedene Schicht unter Verwendung eines UV-Lasers gehärtet wird, wodurch das die abgeschiedene Schicht bildende Monomer polymerisiert wird, sodass es zu einem festen Polymer wird, das ein keramisches Pulver enthält, das geeignet ist, als ein Elektrolyt zu wirken,
iii. die Aufbauplattform nach unten bewegt wird und die Schritte i) und ii) wiederholt werden, so dass der monolithische Körper (1) in Richtung einer dritten Koordinate (Y) bis zur Fertigstellung wächst und man dadurch einen endgültigen monolithischen Grünkörper (1) erhält;
iv. organisches Material von dem Grünkörper (1) durch eine thermische Behandlung unter Sauerstoffatmosphäre entfernt wird, um einen Braunkörper zu erhalten, der frei von organischem Material ist;
- Sintern des fugenlosen, monolithischen Körpers (1), um die verdichtete keramische elektrochemische Zellenvorrichtung bereitzustellen, und
- Funktionalisieren durch Beschichten oder Imprägnieren der anodischen und kathodischen ersten und zweiten Kanäle (3, 4), die jeweils durch die erste bzw. die zweite Hohlhelix definiert werden.

## Revendications

1. Dispositif de cellule électrochimique destiné à être utilisé en mode pile à combustible à oxyde solide (SOFC) et/ou en mode cellule d'électrolyse à oxyde solide (SOEC), comprenant :
- un corps monolithique sans joint à base de céramique (1) ayant une structure à double hélice pouvant être obtenue par impression céramique 3D,
dans lequel ladite structure à double hélice comprend :
- une première hélice creuse conçue pour agir comme une anode et définissant un premier canal de circulation de fluide (3) comprenant une entrée (3a) et une sortie (3b) ;
- une seconde hélice creuse conçue pour agir en tant que cathode et définissant un second canal de circulation de fluide (4) comprenant une entrée (4a) et une sortie (4b) ;
- les première et seconde hélices creuses ayant toutes les deux un axe commun et se différenciant l'une de l'autre par une translation le long de l'axe de sorte que le premier canal de circulation de fluide (3) est disposé à côté du second canal de circulation de fluide (4) ; et
- un électrolyte céramique solide (5) disposé entre les premier et second canaux de circulation de fluide (3, 4) ;
- le premier canal de circulation de fluide (3) et le second canal de circulation de fluide (4) définissant un circuit hélicoïdal pour la circulation soit du combustible, soit de l'oxygène, en fonction de l'utilisation du dispositif en mode cellule électrochimique.

2. Dispositif de cellule électrochimique selon la revendication 1, dans lequel le second canal de circulation de fluide (4) est un canal ouvert sur l'extérieur du corps monolithique (1).

3. Dispositif de cellule électrochimique selon la revendication 1, dans lequel le corps monolithique (1) comprend une chambre intérieure (6) disposée le long de l'axe commun des première et seconde hélices creuses, ladite chambre intérieure (6) étant en communication fluidique avec l'entrée (3a) du premier canal (3) défini par la première hélice creuse agissant comme une anode.

4. Dispositif de cellule électrochimique selon la revendication 3, le dispositif comprenant un moyen de chauffage disposé dans la chambre intérieure (6) permettant de chauffer soit le combustible soit l'oxygène en fonction de l'utilisation du dispositif en mode cellule électrochimique.

5. Dispositif de cellule électrochimique selon la revendication 4, dans lequel le moyen de chauffage comprend une chambre de combustion permettant de chauffer ou de brûler des fluides.

6. Dispositif de cellule électrochimique selon l'une quelconque des revendications 3 à 5, dans lequel le corps monolithique (1) comprend une chambre de chauffage (8) disposée coaxialement à l'extérieur des première et seconde hélices creuses, la chambre de chauffage (8) étant en communication fluidique avec l'entrée (4a) et la sortie (4b) du second canal (4) défini par la seconde hélice creuse agissant comme une cathode.

7. Dispositif de cellule électrochimique selon l'une quelconque des revendications 1 et 3 à 6, dans lequel la chambre intérieure (6) et/ou la chambre de chauffage (8) comprennent une couche d'un matériau catalytique pour que la chambre intérieure (6) soit utilisée comme reformeur de méthane, et/ou pour que la chambre de chauffage (8) soit utilisée comme réacteur de méthanisation en fonction de l'utilisation du dispositif en mode cellule électrochimique.

8. Dispositif de cellule électrochimique selon l'une quelconque des revendications précédentes, dans lequel l'électrolyte céramique solide (5a) présente une surface ondulée.

9. Dispositif de cellule électrochimique selon l'une quelconque des revendications précédentes, dans lequel une paroi commune des premier et second canaux de circulation de fluide adjacents (3, 4) définit l'électrolyte céramique solide (5) disposé entre les premier et second canaux de circulation de fluide (3, 4).

10. Procédé de fonctionnement d'une pile à combustible à oxyde solide (SOFC) au moyen d'un dispositif de cellule électrochimique selon l'une quelconque des revendications 1 à 9, comprenant les étapes suivantes :
- l'alimentation en combustible de la première hélice creuse agissant comme une anode entre une entrée (3a) et une sortie (3b) en traversant le premier canal de circulation de fluide (3) du corps (1), l'alimentation en oxygène de la seconde hélice creuse agissant comme une cathode entre une entrée (4a) et une sortie (4b) en traversant le second canal de circulation de fluide (4) du corps (1), et
- la fourniture d'anions d'oxygène entre la cathode et l'anode au moyen d'un électrolyte céramique solide (5) disposé entre les premier et second canaux de circulation de fluide (3, 4) définis respectivement par les première et seconde hélices creuses.

11. Procédé de fonctionnement d'une cellule d'électrolyse à oxyde solide (SOEC) au moyen d'un dispositif de cellule électrochimique selon l'une quelconque des revendications 1 à 9, comprenant les étapes suivantes :
- l'alimentation en combustible de la seconde hélice creuse agissant comme une cathode entre une entrée (4a) et une sortie (4b) en traversant le second canal de circulation de fluide (4) du corps (1),
- l'alimentation en oxygène de la première hélice creuse agissant comme une anode entre une entrée (3a) et une sortie (3b) en traversant le premier canal de circulation de fluide (3) du corps (1), et
- la fourniture d'anions d'oxygène entre la cathode et l'anode au moyen d'un électrolyte céramique solide (5) disposé entre les premier et second canaux de circulation de fluide (3, 4) définis respectivement par les première et seconde hélices creuses.

12. Procédé selon la revendication 10, dans lequel le dispositif de cellule comprend une chambre intérieure (6) disposée le long de l'axe commun des première et seconde hélices creuses, ladite chambre intérieure (6) ayant une couche d'un matériau catalytique destiné à être utilisé comme reformeur,
- dans lequel l'étape d'alimentation en combustible de la première hélice creuse agissant comme une anode comprend une étape de reformage du méthane pour convertir le méthane en CO et H₂, ladite étape de reformage du méthane étant exécutée lorsque le combustible traverse ladite chambre intérieure (6).

13. Procédé selon 11, dans lequel le dispositif de cellule comprend une chambre de chauffage (8) disposée coaxialement à l'extérieur des première et seconde hélices creuses, ladite chambre de chauffage (8) ayant une couche d'un matériau catalytique destiné à être utilisé comme réacteur de méthanisation,
- dans lequel l'étape d'alimentation en combustible de la seconde hélice creuse agissant comme une cathode comprend une étape de méthanisation pour obtenir du méthane, ladite étape de méthanisation étant exécutée lorsque le combustible traverse ladite chambre de chauffage (8).

14. Procédé selon l'une quelconque des revendications 10 à 13, comprenant en outre l'étape suivante :
- le chauffage du dispositif de cellule à l'aide d'un moyen de chauffage situé dans une chambre intérieure (6) disposée le long de l'axe commun des première et seconde hélices creuses.

15. Procédé de fabrication d'une dispositif de cellule électrochimique selon l'une quelconque des revendications 1 à 9, **caractérisé en ce qu'il** comprend les étapes suivantes :
- la préparation d'une pâte d'impression 3D ;
- l'introduction de la pâte d'impression préparée dans une imprimante 3D de type imprimante SLA, dans lequel ;
i. une première couche mince est déposée sur une plate-forme de construction, la première couche ayant la forme de la première couche du corps monolithique,
ii. la couche déposée est durcie à l'aide d'un laser UV, polymérisant ainsi le monomère formant la couche déposée de manière à devenir un polymère solide contenant une poudre céramique susceptible d'agir comme un électrolyte,
iii. la plate-forme de construction est déplacée vers le bas et les étapes i) et ii) sont répétées de sorte que le corps monolithique (1) croît selon une troisième coordonnée (Y) jusqu'à la finition, obtenant ainsi un corps monolithique vert final (1) ;
iv. la matière organique est éliminée du corps vert (1) par un traitement thermique sous atmosphère d'oxygène pour produire un corps brun exempt de matière organique ;
- le frittage du corps monolithique sans joint (1) pour fournir le dispositif de cellule électrochimique en céramique densifiée, et
- la fonctionnalisation par revêtement ou imprégnation des premier et second canaux anodique et cathodique (3, 4) respectivement définis par les première et seconde hélices creuses.
